(19) **Europäisches Patentamt**

**European Patent Office**

**Office européen des brevets**

(11) **EP 1 055 585 B1**

(12) **EUROPEAN PATENT SPECIFICATION**

(45) Date of publication and mention
of the grant of the patent:
**28.06.2006   Bulletin 2006/26**

(51) Int Cl.:
***B62D 15/02*** *(2006.01)*

(21) Application number: **00110843.0**

(22) Date of filing: **22.05.2000**

(54) **Garaging-movement aiding system**

Hilfssystem zum Einparken in eine Garage

Dispositif d'aide pour se garer

(84) Designated Contracting States:
**DE FR GB**

(30) Priority:   **26.05.1999   JP 14714899**

(43) Date of publication of application:
**29.11.2000   Bulletin 2000/48**

(73) Proprietor: **HONDA GIKEN KOGYO KABUSHIKI KAISHA**
**Minato-ku**
**Tokyo (JP)**

(72) Inventors:
• **Sakai, Katsuhiro**
  **Wako-shi,**
  **Saitama (JP)**
• **Shimizu, Yasuo,**
  **K.K. Honda Gijutsu Kenkyusho**
  **Wako-shi,**
  **Saitama (JP)**
• **Yoneda, Atsuhiko,**
  **K.K. Honda Gijutsu Kenkyusho**
  **Wako-shi,**
  **Saitama (JP)**

(74) Representative: **Prechtel, Jörg et al**
**Weickmann & Weickmann,**
**Patentanwälte,**
**Postfach 860 820**
**81635 München (DE)**

(56) References cited:
**EP-A- 0 835 797        EP-A- 0 849 142**
**US-A- 4 931 930        US-A- 5 764 015**

**Description**

The invention relates to a garaging-movement aiding system for alleviating a burden of operation in the garaging of a vehicle carried out by a driver.

An automatically steering system is known from Japanese Patent Application Laid-open No.10-167104, which is designed so that the garaging of a vehicle can be carried out without need for a driver's steering operation by automatically carrying out a steering operation utilizing an actuator for an electric power steering device mounted on the vehicle.

In the above known system, a locus of movement of the vehicle from a garaging-movement starting position to a garaging-movement completing position is previously stored as a relationship between a movement distance and a steering angle, so that the vehicle can be garaged with a driver s hand released from a steering wheel by operating the actuator for the electric power steering device based on the relationship.

However, the known system suffers from the following problem: In a vehicle including no electric power steering device, it is necessary to provide a special actuator for automatically carrying out the steering operation, resulting in a substantially increased cost. A vehicle including an electric power steering device also suffers from a problem that a control means for controlling the operation of the actuator and a steering angle sensor are required, resulting in an increased cost.

It is an object of the invention to provide a garaging-movement aiding system at a low cost, wherein the burden of a garaging operation conducted by a driver can be alleviated effectively.

To achieve the object, there is provided a garaging-movement aiding system for aiding a driving operation for moving a vehicle forwards from a garaging-movement starting position to a movement-direction changing position and then moving the vehicle backwards to a garaging-movement completing position, while turning the vehicle, the garaging-movement aiding system comprising a memory means which previously stores a reference distance of forward movement of the vehicle from the garaging-movement starting position to the movement-direction changing position, a forward movement distance detecting means for detecting a distance of forward movement of the vehicle from the garaging-movement starting position, a teaching means for teaching a driver to carry out, at the movement-direction changing position, at least one of an operation for stopping the vehicle and an operation for changing the movement direction, and a teaching-timing determining means for determining a teaching timing for operating the teaching means, based on the comparison of the forward movement distance detected by the forward movement distance detecting means with the reference forward movement distance stored in the memory means.

With the above arrangement, when the distance of forward movement of the vehicle has become equal to the previously stored reference forward movement distance during forward movement of the vehicle from the garaging-movement starting position to the movement-direction changing position, the teaching means teaches the driver to carry out at least one of the vehicle stopping operation and the movement-direction changing operation, whereby the driver can stop the vehicle correctly at the movement-direction changing position. Therefore, it is possible for the driver to easily and reliably conduct the vehicle to the garaging-movement completing position only by moving the vehicle backwards from the movement-direction changing position. Moreover, an actuator and a steering sensor for automatically carrying out the steering operation for such period of conduction of the vehicle are not required and hence, the increase in cost can be suppressed to the minimum.

Preferably, the reference forward movement distance stored in the memory means is a distance of straight forward movement.

With the above arrangement, the reference forward movement distance stored in the memory means is the distance of straight forward movement and hence, the driver only need to move the vehicle straight from the garaging-movement starting position to the movement-direction changing position. Thus, the driving operation is simplified, and also the generation of an error can be suppressed to the minimum.

Preferably, the garaging-movement aiding system includes a vehicle speed detecting means for detecting a vehicle speed, and an acceleration detecting means for detecting an acceleration of the vehicle based on the vehicle speed detected by the vehicle speed detecting means, and in a range of vehicle speed lower than a lower limit vehicle speed detectable by the vehicle speed detecting means, the forward movement distance detecting means estimates a distance of forward movement of the vehicle based on the vehicle speed detected by the vehicle speed detecting means and the acceleration detected by the acceleration detecting means in another range of vehicle speed.

With the above arrangement, in the range of undetectable low vehicle speed, the forward movement distance detecting means estimates the distance of forward movement of the vehicle based on the vehicle speed and the acceleration detected in the other detectable vehicle speed range. Therefore, it is possible to precisely detect the distance of forward movement of the vehicle over the entire region from the garaging-movement starting position to the movement-direction changing position.

Preferably, the teaching-timing determining means changes the teaching timing based on the vehicle speed detected by the vehicle speed detecting means.

With the above arrangement, the teaching timing is changed based on the vehicle speed detected by the vehicle speed detecting means, and hence, the deviation of the stopping position at the movement-direction changing position caused due to the magnitude of the vehicle speed can be corrected precisely.

Preferably, the teaching timing is hastened more, as the vehicle speed is higher.

With the above arrangement, by ensuring that the teaching timing is hastened more, as the vehicle speed is higher, the teaching can be conducted earlier during movement of the vehicle at a high vehicle speed at which the vehicle is liable to overrun the movement-direction changing position, thereby previously preventing such overrunning.

Preferably, the teaching-timing determining means changes the teaching timing in accordance with the minimum radius of turning movement of the vehicle.

With the above arrangement, the teaching timing is changed in accordance with the minimum radius of turning movement of the vehicle. Therefore, the deviation of a stopping position of the vehicle caused at the garaging-movement completing position due to the magnitude of the minimum turning radius can be corrected precisely.

Preferably, the teaching timing is hastened more, as the minimum radius of turning movement of the vehicle is smaller.

With the above arrangement, by ensuring that the teaching timing is hastened more, as the minimum radius of turning movement of the vehicle is smaller, it is possible to previously prevent an inner side (as viewed during turning of the vehicle) of the vehicle moving backwards from interfering with an inlet corner of a garage.

The invention will now be described by way of an embodiment shown in the accompanying drawings.

Fig.1 is an illustration showing a path of movement of a vehicle for garaging the vehicle;

Fig.2 is a block diagram of a control system for a garaging-movement aiding system;

Fig.3 is a diagram for explaining a technique for calculating a distance of forward movement of the vehicle by integrating a vehicle speed;

Fig.4 is a diagram showing a variation in vehicle speed from a garaging-movement starting position to a movement-direction changing position;

Figs.5A and 5B are diagrams for explaining a technique for estimating a distance of forward movement immediately after the starting of the vehicle and a distance of forward movement immediately before the stopping of the vehicle;

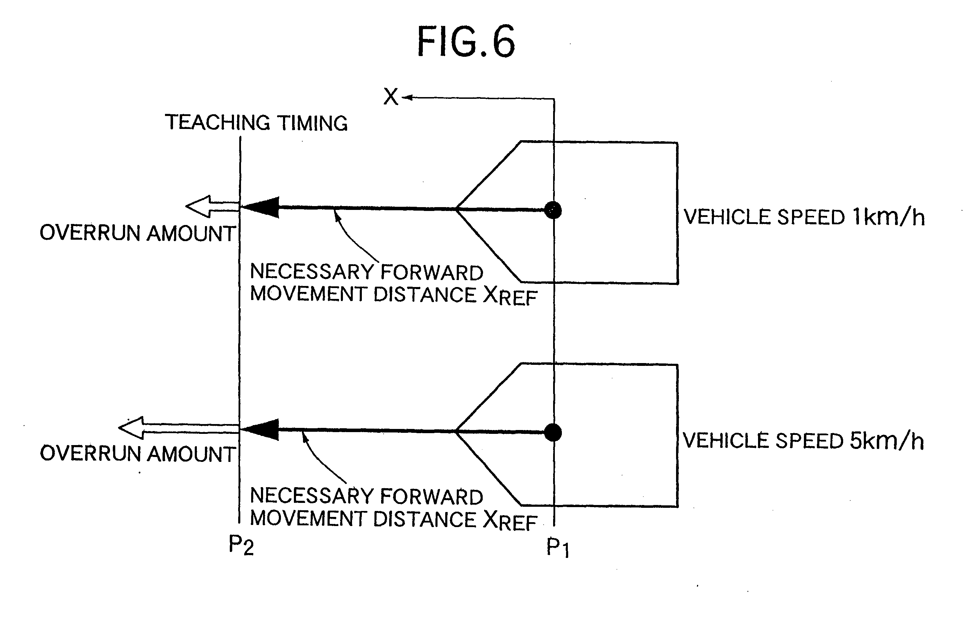

Fig.6 is a diagram for explaining the deviation of a stopping position due to the magnitude of vehicle speed;

Fig.7 is a diagram for explaining the correction of reference forward movement distances at the different magnitudes of vehicle speed;

Fig.8 is a diagram showing a map for searching a reference forward-movement distance from the vehicle speed;

Fig.9 is a diagram for explaining the deviation of a stopping position due to the magnitude of the minimum radius of turning movement of the vehicle;

Fig.10 is a diagram for explaining the correction of reference forward movement distances for vehicles having different minimum radii of turning movement; and

Fig.11 is a diagram showing a map for searching a reference forward movement distance from the minimum radius of turning movement of the vehicle.

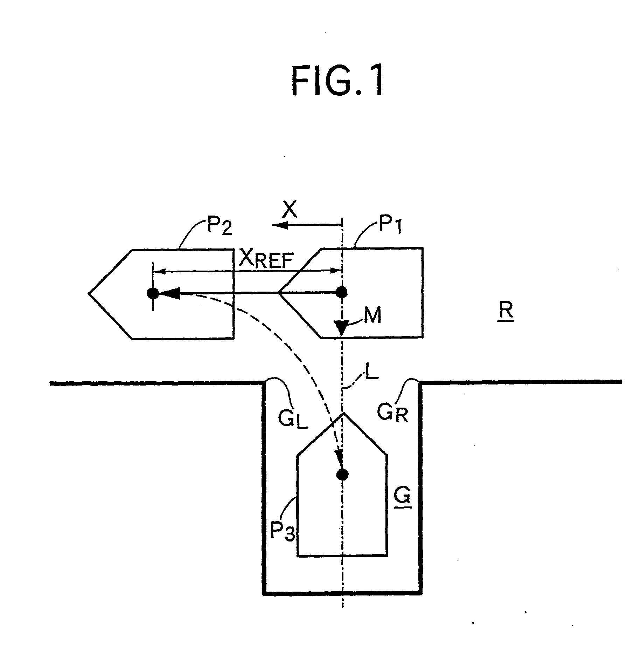

Fig.1 shows the garaging-movement of a vehicle into a garage G provided adjacent a left side of a road R. After stopping the vehicle at a garaging-movement starting position $P_1$ adjacent an inlet of the garage G, a driver moves the vehicle straight forwards and once stops the vehicle at a movement-direction changing position $P_2$. Then, the driver operates a steering wheel leftwards to a limit position; moves the vehicle backwards, while turning the vehicle leftwards, and stops the vehicle at a garaging-movement completing position $P_3$ within the garage G, thereby finishing the garaging operation.

A main cause of an unskilled driver failing to conduct the garaging-movement of the vehicle is in that the driver cannot stop the vehicle correctly at the movement-direction changing position $P_2$, resulting in a longitudinal disperse in stopping position. For example, when the vehicle has been moved forwards and stopped beyond the movement-direction changing position $P_2$, a vehicle body interferes with a left inlet corner $G_L$ of the garage G in the subsequent backward movement to make the garaging of the vehicle impossible. When the vehicle was moved forwards and stopped at a position short of the movement-direction changing position $P_2$, the vehicle body interferes with a right inlet corner $G_R$ of the garage G in the subsequent backward movement to make the garaging of the vehicle impossible. Therefore, in the embodiment according to the invention, a stopping timing is taught to the driver, so that the vehicle moving forwards from the garaging-movement stating position $P_1$ can be stopped correctly at the movement-direction changing position $P_2$.

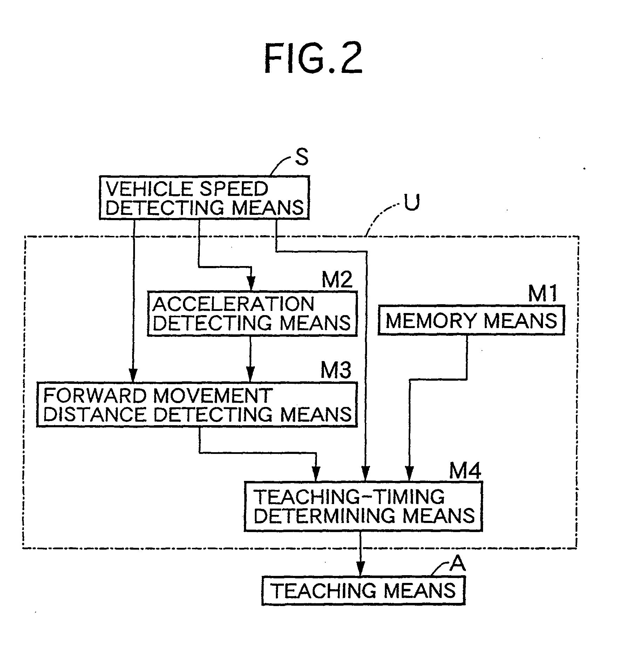

Fig.2 is a block diagram of a garaging-movement aiding system mounted on the vehicle. A vehicle speed detecting means S and a teaching means A are connected to an electronic control unit U comprising a microcomputer. The vehicle speed detecting means S detects a vehicle speed V, for example, based on a time interval of a pulse output with the rotation of wheels. In the present embodiment, the teaching means A comprises a buzzer and teaches the driver a timing for stopping of the vehicle at the movement-direction changing position $P_2$. The teaching means A is not limited to the buzzer and may comprise any sound or light emitter such as a chime, a speaker, a lamp and the like.

The electronic control unit U includes a memory means M1, an acceleration detecting means M2, a forward movement distance detecting means M3, and a teaching-timing determining means M4. The vehicle speed detecting means S is connected to the acceleration detecting means M2, the forward movement distance detecting means M3 and the teaching-timing determining means M4, and the teaching means A is connected to the teaching-timing determining means M4.

The memory means M1 has a reference forward movement distance $X_{REF}$ stored therein, which is a reference distance from the garaging-movement starting position $P_1$ to the movement-direction changing position $P_2$. The reference forward movement distance $X_{REF}$ depends on the size of the vehicle body and the minimum radius $R_{MIN}$ of turning movement of the vehicle, and assumes a value peculiar to the type of the vehicle. A reference forward movement distance $X_{REF}$ common to various types of the vehicle and minimum radii of turning movement varied for various types of the vehicle may be previously stored in the memory means M1, and the common reference forward movement distance $X_{REF}$ may be corrected by the minimum radius $R_{MIN}$ of turning movement peculiar to each of the types of the vehicle in some cases as will be described hereinafter.

The acceleration detecting means M2 calculates an acceleration of the vehicle by differentiating the vehicle speed V detected by the vehicle speed detecting means S with time. A negative acceleration (deceleration) at which the vehicle speed V decreases, is included in the acceleration $\alpha$, in addition to a positive acceleration at which the vehicle speed V increases with the passage of time.

The forward movement distance detecting means M3 detects a distance X of forward movement of the vehicle from the garaging-movement starting position $P_1$ by integrating the vehicle speed V detected by the vehicle speed detecting means S with time. However, the vehicle speed V is lower than a detectable lower limit value $V_{MIN}$ and cannot be detected immediately after the starting of the vehicle and immediately before the stopping of the vehicle. Therefore, the forward movement distance X in such area is estimated based on the vehicle speed V detected in an intermediate area immediately after the starting and immediately before the stopping, and the acceleration $\alpha$ calculated from such vehicle speed V. A technique for estimating the forward movement distance X will be described hereinafter.

The teaching-timing determining means M4 is arranged to compare the forward movement distance X detected by the forward movement distance detecting means M3 with the reference forward movement distance $X_{REF}$ stored in the memory means M1, and to determine that the vehicle has reached the movement-direction changing position $P_2$ at the time when the forward movement distance X has become equal to the reference forward movement distance $X_{REF}$, thereby operating the teaching means A to teach the driver to stop the vehicle. At the time, the teaching timing determined by the teaching-timing determining means M4 is corrected in accordance with the vehicle speed V detected by the vehicle speed detecting means S and in accordance with the minimum radius $R_{MIN}$ of turning movement of the vehicle, as described hereinafter.

The operation of the embodiment of the invention will be described based on a sequence of garaging operations.

First, as shown in Fig.1, the driver drives the vehicle and stops the vehicle at the garaging-movement starting position $P_1$ adjacent the inlet of the garage G. At this time, it is necessary to locate a mark M comprising a sign provided on an inner surface of a door or side mirror on a center line L of the garage G, and to allow the center line of the vehicle body to intersect the center line L of the garage G at substantially right angles. When the driver turns on a garaging-movement start switch (not shown) connected to the electronic control unit U, after the vehicle has been stopped correctly at the garaging-movement starting position $P_1$ in the above manner, the teaching means A emits an intermittent sound (pip pip) to inform the driver that the garaging-movement aiding control has been started.

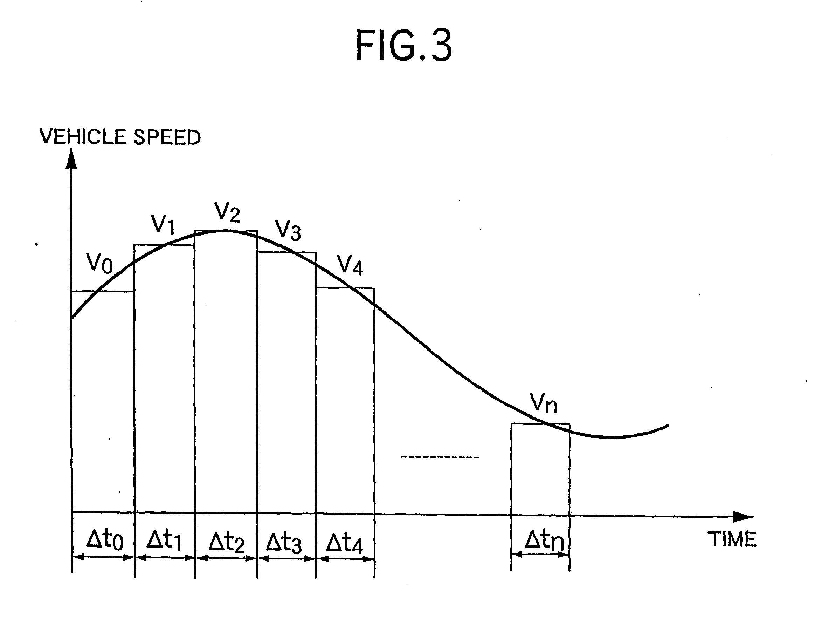

When the driver moves the vehicle straight forwards from the garaging-movement starting position $P_1$ toward the movement-direction changing position $P_2$, the vehicle speed detecting means S outputs a vehicle speed V with the rotation of the wheels. Therefore, vehicle speeds $V_0$, $V_1$, $V_2$, $V_3$ --- $V_n$ are detected at very short intervals of times $\Delta t_0$, $\Delta t_1$, $\Delta t_2$, $\Delta t_3$, --- $\Delta t_n$, respectively, as shown in Fig.3, whereby the distance X of forward movement of the vehicle from the garaging-movement starting position P1 can be detected according to $V_0 \cdot \Delta t_0 + V_1 \cdot \Delta t_1 + V_2 \cdot \Delta t_2 + V_3 \cdot \Delta t_3 + --- + V_n \cdot \Delta t_n$.

By moving the vehicle straight forwards from the garaging-movement starting position $P_1$ toward the movement-direction changing position $P_2$, as described above, not only the steering operation conducted by the driver is facilitated, but also the accuracy of the stopping of the vehicle at the movement-direction changing position $P_2$ can be enhanced. While the vehicle is being moved forwards from the garaging-movement starting position $P_1$ toward the movement-direction changing position $P_2$, the driver may conduct the steering operation to turn the vehicle round toward an opposite lane in some cases. Even in such case, when the vehicle is to be moved backwards from the movement-direction changing position $P_2$ toward the garaging-movement completing position $P_3$, the garaging operation can be conducted without hindrance by stopping the operation of the steering wheel at a location short of the limit position.

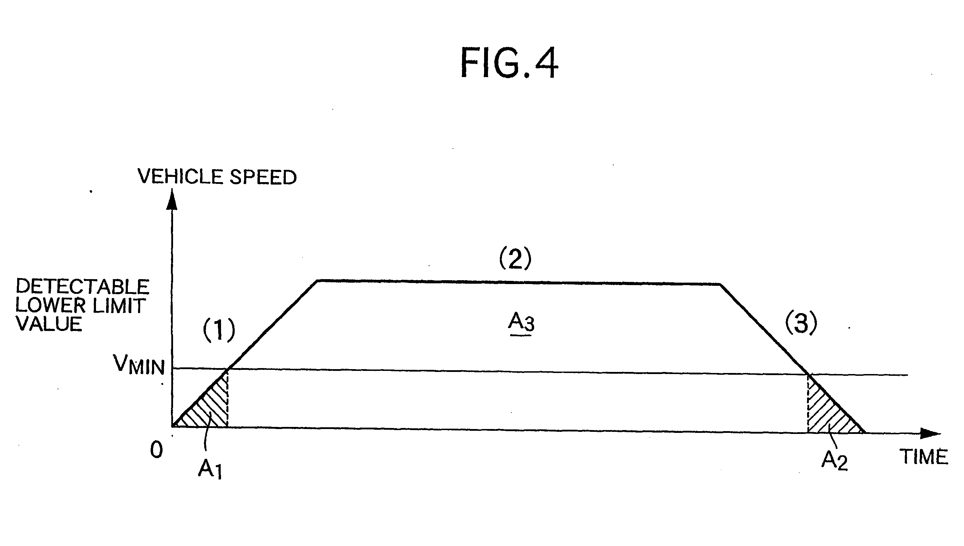

The outline of a variation in vehicle speed V from the starting of the vehicle at the garaging-movement starting position $P_1$ to the stopping of the vehicle at the movement-direction changing position $P_2$ comprises a section (1) where the vehicle speed V is increased from 0 after the starting of the vehicle, a section (2) where the vehicle speed V is constant, and a section (3) where the vehicle speed V is reduced to 0 before the stopping of the vehicle, as shown in Fig.4. The distance X of forward movement of the vehicle from the garaging-movement starting position $P_1$ to the movement-direction changing position $P_2$ corresponds to a time-integration value (an area of a trapezoid) of the vehicle speed V in the sections (1) to (3). However, because the vehicle speed detecting means S cannot detect the vehicle speed V lower than the detectable lower limit value $V_{MIN}$, as described above, a forward movement distance X in a region $A_1$ immediately after the starting of the vehicle and a forward movement distance X in a region $A_2$ immediately before the stopping of the vehicle are incapable of being detected. Therefore, the distances X of forward movement of the vehicle in the two regions $A_1$ and $A_2$ (areas of obliquely lined regions) are calculated by a technique which will be described hereinafter, based on the vehicle speed V detected in another region where the vehicle speed V is equal to or higher than the detectable lower limit value $V_{MIN}$, and the acceleration detected from such vehicle speed V.

As shown in Fig.5A, the vehicle speed V cannot be detected in the region $A_1$ immediately after the starting of the vehicle, and is first detected for the subsequent very short time $\Delta t_0$. It is supposed that such vehicle speed V is $V_0$ at a start point of the very short time $\Delta t_0$, and $V_1$ at an end point of the very short time $\Delta t_0$. Thus, an acceleration $\alpha$ of the vehicle for the very short time $\Delta t_0$ is given according to the following equation:

$$\alpha = (V_1 - V_0) / \Delta t_0 \;\text{---}\; (1)$$

Supposing that the acceleration $\alpha$ (= $(V_1 - V_0) / \Delta t_0$) has not been varied for a period of time t immediately after the starting of the vehicle during which the vehicle speed V could not be detected, the following equation is established:

$$t * \alpha = t * (V_1 - V_0) / \Delta t_0 = V_0 \;\text{---}\; (2)$$

Therefore, the time t is given according to the following equation (3) from the equation (2):

$$t = V_0 / \alpha = (V_0 \; \Delta t_0) / (V_1 - V_0) \;\text{---}\; (3)$$

Thus, a distance X (an area of a triangle shown by oblique lines) of forward movement of the vehicle in the region $A_1$ immediately after the starting of the vehicle can be estimated according to the following equation:

$$X = t * V_0 / 2 = (V_0^2 * \Delta t_0) / 2 (V_1 - V_0) \;\text{---}\; (4)$$

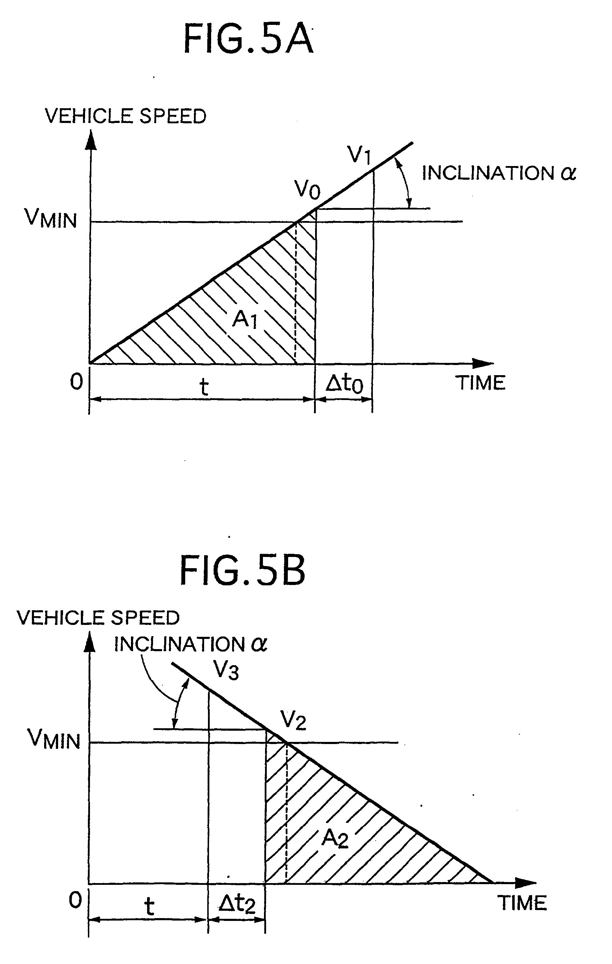

The vehicle speed V cannot be detected in the region $A_2$ immediately before the stopping of the vehicle, but can be detected lastly for the previous very short time $\Delta t_2$, as shown in Fig.5B. It is supposed that such vehicle speed V is $V_3$ at a start point of the very short time $\Delta t_2$ and $V_2$ at an end point of the very short time $\Delta t_2$. Thus, an acceleration (a negative acceleration, namely, a deceleration) $\alpha$ of the vehicle for the very short time $\Delta t_2$ is given according to the following equation (5):

$$\alpha = (V_3 - V_2) / \Delta t_2 \;\text{---}\; (5)$$

Supposing that this acceleration $\alpha$ (= $(V_3 - V_2) / \Delta t_2$) has not been varied even for a time t immediately before the stopping of the vehicle for which the vehicle speed V has been incapable of being detected, the following equation (6) is established:

$$t * \alpha = t * (V_3 - V_2) / \Delta t_2 = V_2 \;\text{---}\; (6)$$

Therefore, the time t is given according to the following equation (7) from the equation (6):

$$t = V_2 / \alpha = (V_2 * \Delta t_2) / (V_3 - V_2) \;\text{---}\; (7)$$

Thus, a distance X (an area of a triangle shown by oblique lines) of forward movement of the vehicle in the region $A_2$ immediately before the stopping of the vehicle can be estimated according to the following equation:

$$X = t * V_2 / 2 = (V_2^2 * \Delta t_2) / 2 (V_3 - V_2) \text{ --- (8)}$$

From the forgoing, in the region (the region $A_3$ in the trapezoid shown in Fig.4) where the vehicle speed V can be detected, a forward movement distance X is calculated by integrating the vehicle speed V with time, and in the regions (the regions $A_1$ and $A_2$ in the trapezoid shown in Fig.4) where the vehicle speed V cannot be detected, forward movement distances X are estimated according to the equations (4) and (8), respectively. By adding these forward movement distances X, a forward movement distance X from the garaging-movement starting position $P_1$ to the movement-direction changing position $P_2$ can be detected precisely.

When the distance X of forward movement of the vehicle from the garaging-movement starting position $P_1$ has reached the reference forward movement distance $X_{REF}$ previously stored, namely, the vehicle has reached the movement-direction changing position $P_2$, the teaching means A emits a continuous sound (peep) to inform the driver to carry out a vehicle stopping operation or an operation for changing the movement direction from the forward movement to the backward movement, so that the vehicle can be stopped correctly at the movement-direction changing position $P_2$ to start the backward movement.

Even if the teaching means A is operated at a time point when the vehicle has reached the movement-direction changing position $P_2$, there is a possibility that the vehicle could not be stopped immediately and might overrun the movement-direction changing position $P_2$. Therefore, it is conceived that the reference forward movement distance $X_{REF}$ is previously set at a small value in anticipation of an amount of overrun of the vehicle. However, the overrun amount is varied in accordance with the magnitude of the vehicle speed V of the vehicle moving forwards and for this reason, it is difficult to expect a good result, only by setting the reference forward movement distance $X_{REF}$ at the small value.

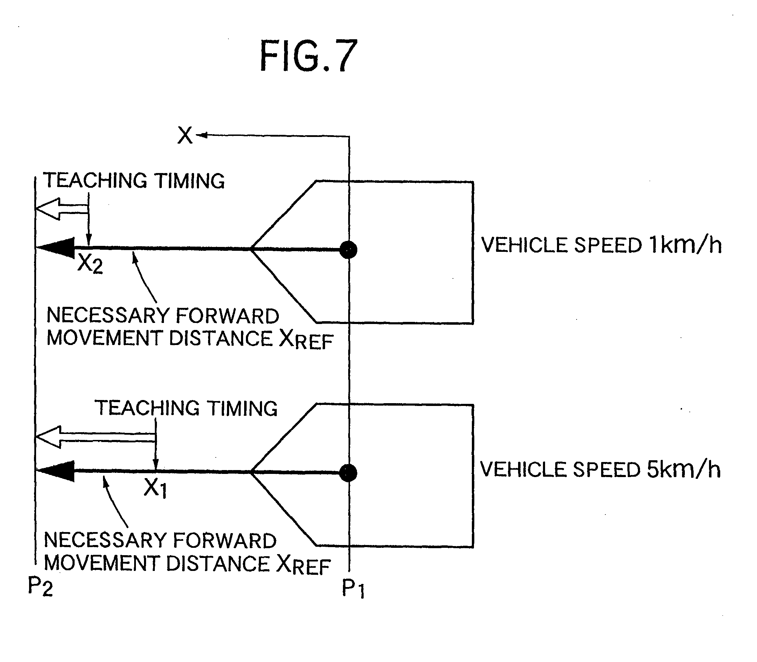

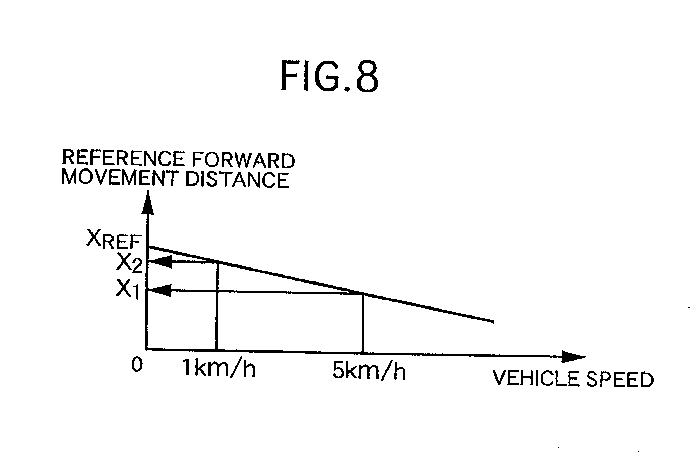

To solve the above problem, in the present embodiment, the reference forward movement distance $X_{REF}$ is corrected based on the vehicle speed V of the vehicle moving forwards (the vehicle speed V in an intermediate region excluding immediately after the starting of the vehicle and immediately before the stopping of the vehicle). More specifically, as shown in Figs.7 and 8, when at a low vehicle speed (e.g., V = 1 km/hr) which may provide a small overrun amount, a slightly decreased value $X_2$, to which the previously stored reference forward movement distance $X_{REF}$ has been corrected, is employed as a reference forward movement distance $X_{REF}$, and when at a high vehicle speed (e.g., V = 5 km/hr) which may provide a large overrun amount, a remarkably decreased value $X_1$, to which the previously stored reference forward movement distance $X_{REF}$ has been corrected, is employed as a reference forward movement distance $X_{REF}$. This ensures that the teaching timing provided by the teaching means A is corrected, and thus, the vehicle can be stopped with a good accuracy at the movement-direction changing position $P_2$ without being influenced by the magnitude of the vehicle speed V.

When the vehicle is stopped at the movement-direction changing position $P_2$ in the above manner, the driver can move the vehicle correctly to the garaging-movement completing position $P_3$ only by moving the vehicle backwards in a state in which the steering wheel has been operated fully leftwards.

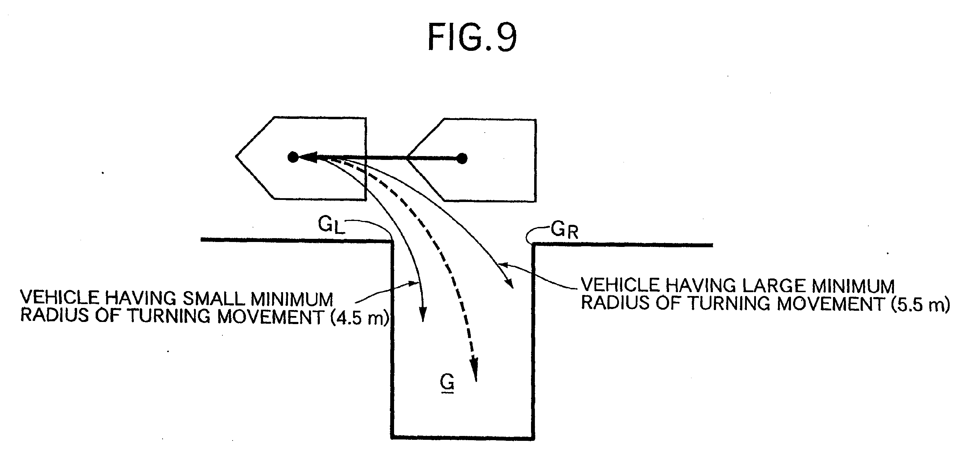

The minimum radius $R_{MIN}$ of turning movement of the vehicle is varied depending on the type of the vehicle. If the reference forward movement distance $X_{REF}$ is set at a value suitable for a vehicle which is turned at a minimum turning radius $R_{MIN}$ of 5.0 m, it may be impossible in some cases to garage a vehicle having a minimum turning radius of $R_{MIN}$ of 4.5 m and capable of a small sharp turn, due to an interference of its vehicle body with the left inlet corner $G_L$ of the garage G, as shown in Fig.9. On the other hand, it may be impossible in some cases to garage a vehicle having a minimum turning radius of $R_{MIN}$ of 5.5 m and incapable of a small sharp turn, due to an interference of its vehicle body with the right inlet corner $G_R$ of the garage G.

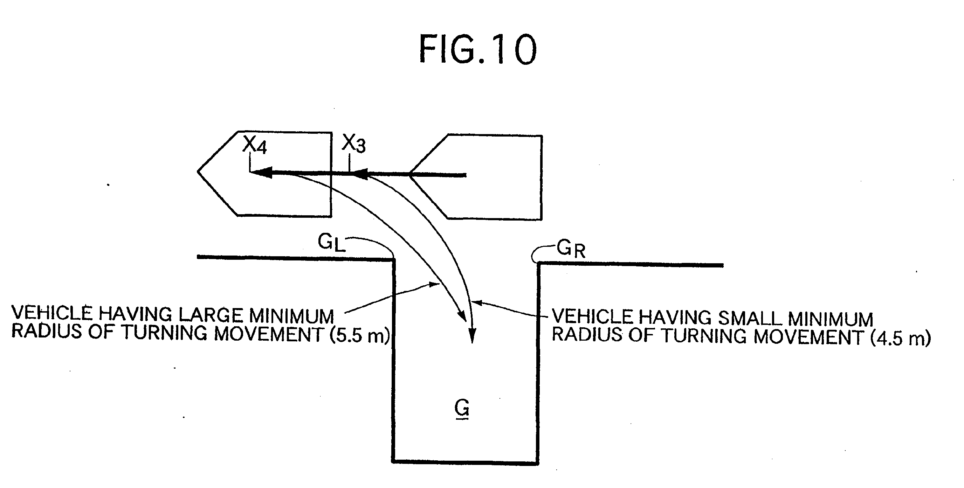

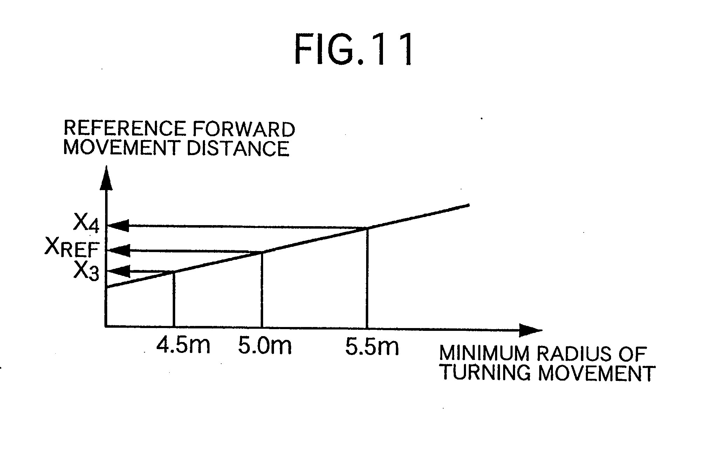

To solve the above problem, the reference forward movement distance $X_{REF}$ is corrected based on the minimum turning radius $R_{MIN}$ of the vehicle in this embodiment. More specifically, as shown in Figs.10 and 11, in a vehicle having a small minimum turning radius $R_{MIN}$ (e.g., $R_{MIN}$ = 4.5 m), a decreased value $X_3$, to which the previously stored reference forward movement distance $X_{REF}$ has been corrected, is employed as a reference forward movement distance $X_{REF}$. In a vehicle having a large minimum turning radius $R_{MIN}$ (e.g., $R_{MIN}$ = 5.5 m), an increased value $X_4$, to which the previously stored reference forward movement distance $X_{REF}$ has been corrected, is employed as a reference forward movement distance $X_{REF}$. This ensures that the teaching timing provided by the teaching means A is corrected, and thus, the vehicle can be stopped with a good accuracy at the garaging-movement completing position $P_3$ without being influenced by the magnitude of the minimum turning radius $R_{MIN}$ of the vehicle.

As described above, when the driver is driving the vehicle forwards from the garaging-movement starting position $P_1$ to the movement-direction changing position $P_2$, the teaching means A teaches the driver a timing of stopping the vehicle, based on the comparison of an actual forward movement distance X of the vehicle with the reference forward movement distance $X_{REF}$. Therefore, it is possible for the driver to stop the vehicle correctly at the movement-direction

6

changing position $P_2$. As a result, it is possible for the driver to conduct the vehicle correctly to the garaging-movement completing position $P_3$ only by moving the vehicle backwards from the movement-direction changing position $P_2$, leading to an extremely easy garaging operation. Moreover, an actuator for automatically conducting the steering operation is not required and hence, the garaging-movement aiding system is also applicable to a vehicle having no actuator for an electric power steering device and a vehicle having no exclusive actuator. Further, a steering angle sensor is not required and hence, the garaging-movement aiding system having a high practicality can be realized at an extremely low cost.

For example, the garaging conducted by the leftward and backward movement of the vehicle has been illustrated in the embodiment, but the invention is likewise applicable to the garaging conducted by the rightward and backward movement of the vehicle.

In addition, the forward movement distance X has been detected by the integrating the vehicle speed V with time in the embodiment, but may be detected by multiplying a rotational speed of the wheel detected by a wheel rotational speed detecting means by a constant determined depending on the radius of the wheel. In summary, the invention provides a garaging-movement aiding system at a low cost, wherein the burden of a garaging operation provided by a driver can be alleviated effectively. To achieve this, a garaging-movement aiding system aids an operation for moving a vehicle forwards from a garaging-movement starting position $P_1$ to a movement-direction changing position $P_2$ and then moving the vehicle backwards to a garaging-movement completing position $P_3$, while turning the vehicle. The garaging-movement aiding system is designed to teach a stopping timing to the driver by a buzzer or the like so that the vehicle can be stopped precisely, by detecting a distance of forward movement of the vehicle from the garaging-movement starting position $P_1$ and comparing such distance of forward movement with a previously stored reference forward movement distance. Therefore, it is possible for the driver to conduct the vehicle correctly to the garaging-movement completing position $P_3$ only by operating a steering wheel to a limit position to move the vehicle backwards from the movement-direction changing position $P_2$.

**Claims**

1. A garaging-movement aiding system for aiding a driving operation for moving a vehicle forwards from a garaging-movement starting position ($P_1$) to a movement-direction changing position ($P_2$) and then moving the vehicle backwards to a garaging-movement completing position ($P_3$), while turning the vehicle, said garaging-movement aiding system comprising
   a memory means (M1) which previously stores a reference distance ($X_{REF}$) of forward movement of the vehicle from said garaging-movement starting position ($P_1$) to said movement-direction changing position ($P_2$),
   a forward movement distance detecting means (M3) for detecting a distance (X) of forward movement of the vehicle from said garaging-movement starting position ($P_1$),
   a teaching means (A) for teaching a driver to carry out, at said movement-direction changing position ($P_2$), at least one of an operation for stopping the vehicle and an operation for changing the movement direction, and
   a teaching-timing determining means (M4) for determining a teaching timing for operating the teaching means (A), based on the comparison of said forward movement distance (X) detected by said forward movement distance detecting means (M3) with said reference forward movement distance ($X_{REF}$) stored in said memory means (M1).

2. A garaging-movement aiding system according to claim 1, wherein said reference forward movement distance ($X_{REF}$) stored in said memory means (M1) is a distance of straight forward movement.

3. A garaging-movement aiding system according to claim 1 or 2, including a vehicle speed detecting means (S) for detecting a vehicle speed (V), and an acceleration detecting means (M2) for detecting an acceleration ($\alpha$) of the vehicle based on the vehicle speed (V) detected by said vehicle speed detecting means (S), and wherein in a range of vehicle speed lower than a lower limit vehicle speed ($V_{MIN}$) detectable by the vehicle speed detecting means (S), said forward movement distance detecting means (M3) estimates the distance (X) of forward movement of the vehicle based on the vehicle speed (V) detected by said vehicle speed detecting means (S) and the acceleration ($\alpha$) detected by said acceleration detecting means (M2) in another range of vehicle speed.

4. A garaging-movement aiding system according to any of claims 1 to 3, wherein said teaching-timing determining means (M4) changes the teaching timing based on the vehicle speed (V) detected by said vehicle speed detecting means (S).

5. A garaging-movement aiding system according to claim 4, wherein the teaching timing is hastened more, as the vehicle speed (V) is higher.

6. A garaging-movement aiding system according to any of claims 1 to 5, wherein said teaching-timing determining means (M4) changes the teaching timing in accordance with the minimum radius ($R_{MIN}$) of turning movement of the vehicle.

7. A garaging-movement aiding system according to claim 6, wherein the teaching timing is hastened more, as the minimum radius ($R_{MIN}$) of turning movement of the vehicle is smaller.

**Patentansprüche**

1. Unterstützungssystem zum Einparken in eine Garage zum Unterstützen einer Fahrbedienung zum Bewegen eines Fahrzeugs in Vorwärtsrichtung von einer Garagen-Einparkstartposition ($P_1$) zu einer Bewegungsrichtung-Änderungsposition ($P_2$) und dann zum Bewegen des Fahrzeugs in Rückwärtsrichtung in eine Garagen-Einparkendposition ($P_3$), während das Fahrzeug gewendet wird, wobei das Garagen-Einparkunterstützungssystem umfasst:

   ein Speichermittel (M1), welches zuvor eine Referenzentfernung ($X_{REF}$) einer Vorwärtsbewegung des Fahrzeugs von der Garagen-Einparkstartposition ($P_1$) zur Bewegungsrichtung-Änderungsposition ($P_2$) speichert,
   ein Vorwärtsbewegungsentfernung-Erfassungsmittel (M3) zum Erfassen einer Entfernung (X) der Vorwärtsbewegung des Fahrzeugs von der Garagen-Einparkstartposition ($P_1$),
   ein Unterrichtungsmittel (A) zum Unterrichten eines Fahrers, an der Bewegungsrichtung-Änderungsposition ($P_2$) eine Bedienung zum Stoppen des Fahrzeugs oder/und eine Bedienung zum Ändern der Bewegungsrichtung vorzunehmen, und
   ein Unterrichtungszeitpunkt-Bestimmungsmittel (M4) zum Bestimmen eines Unterrichtungszeitpunkts zum Betätigen des Unterrichtungsmittels (A), basierend auf dem Vergleich der durch das Vorwärtsbewegungsentfernung-Erfassungsmittel (M3) erfassten Vorwärtsbewegungsentfernung (X) mit der im Speichermittel (M1) gespeicherten Referenzvorwärtsbewegungsentfernung ($X_{REF}$).

2. Unterstützungssystem zum Einparken in eine Garage nach Anspruch 1, wobei die im Speichermittel (M1) gespeicherte Referenzvorwärtsbewegungsentfernung ($X_{REF}$) eine Entfernung einer Geradeausbewegung in Vorwärtsrichtung ist.

3. Unterstützungssystem zum Einparken in eine Garage nach Anspruch 1 oder 2, wobei es enthält: ein Fahrzeuggeschwindigkeitserfassungsmittel (S) zum Erfassen einer Fahrzeuggeschwindigkeit (V) und ein Beschleunigungserfassungsmittel (M2) zum Erfassen einer Beschleunigung ($\alpha$) des Fahrzeugs basierend auf der durch das Fahrzeuggeschwindigkeitserfassungsmittel (S) erfassten Fahrzeuggeschwindigkeit (V),
   und wobei das Vorwärtsbewegungsentfernung-Erfassungsmittel (M3) in einem Fahrzeuggeschwindigkeitsbereich, welcher geringer ist als eine vom Fahrzeuggeschwindigkeiterfassungsmittel (S) erfassbare untere Grenzfahrzeuggeschwindigkeit ($V_{MIN}$), die Vorwärtsbewegungsentfernung (X) des Fahrzeugs abschätzt basierend auf der durch das Fahrzeuggeschwindigkeitserfassungsmittel (S) erfassten Fahrzeuggeschwindigkeit (V) und auf der durch das Beschleunigungserfassungsmittel (M2) in einem anderen Fahrzeuggeschwindigkeitsbereich erfassten Beschleunigung ($\alpha$).

4. Unterstützungssystem zum Einparken in eine Garage nach einem der Ansprüche 1 bis 3, wobei das Unterrichtungszeitpunkt-Bestimmungsmittel (M4) den Unterrichtungszeitpunkt ändert, basierend auf der durch das Fahrzeuggeschwindigkeitserfassungsmittel (S) erfassten Fahrzeuggeschwindigkeit (V).

5. Unterstützungssystem zum Einparken in eine Garage nach Anspruch 4, wobei der Unterrichtungszeitpunkt schneller kommt, wenn die Fahrzeuggeschwindigkeit (V) höher ist.

6. Unterstützungssystem zum Einparken in eine Garage nach einem der Ansprüche 1 bis 5, wobei das Unterrichtungszeitpunkt-Bestimmungsmittel (M4) den Unterrichtungszeitpunkt in Übereinstimmung mit dem Minimalradius ($R_{MIN}$) der Wendebewegung des Fahrzeugs ändert.

7. Unterstützungssystem zum Einparken in eine Garage nach Anspruch 6, wobei der Unterrichtungszeitpunkt schneller kommt, wenn der Minimalradius ($R_{MIN}$) der Wendebewegung des Fahrzeugs kleiner ist.

**Revendications**

1. Système d'assistance au mouvement pour se garer pour assister une opération de conduite pour déplacer un véhicule en avant d'une position de début de mouvement pour se garer ($P_1$) à une position de changement de direction de mouvement ($P_2$) et ensuite déplacer le véhicule en arrière à une position d'achèvement de mouvement pour se garer ($P_3$), tout en faisant tourner le véhicule, ledit système d'assistance au mouvement pour se garer comprenant :

   des moyens de mémorisation (M1) qui mémorisent au préalable une distance de référence ($X_{REF}$) de mouvement en avant du véhicule de ladite position de début de mouvement pour se garer ($P_1$) à ladite position de changement de direction de mouvement ($P_2$),
   des moyens de détection de distance de mouvement en avant (M3) pour détecter une distance (X) de mouvement en avant du véhicule à partir de ladite position de début de mouvement pour se garer ($P_1$),
   des moyens d'enseignement (A) pour enseigner à un conducteur l'exécution, à ladite position de changement de direction de mouvement ($P_2$), d'au moins l'une d'une opération pour arrêter le véhicule et d'une opération pour changer de direction de mouvement, et
   des moyens de détermination de minutage d'enseignement (M4) pour déterminer un minutage d'enseignement pour mettre en oeuvre les moyens d'enseignement (A), sur la base de la comparaison de ladite distance de mouvement en avant (X) détectée par lesdits moyens de détection de distance de mouvement en avant (M3) avec ladite distance de mouvement en avant de référence ($X_{REF}$) mémorisée dans lesdits moyens de mémorisation (M1).

2. Système d'assistance au mouvement pour se garer selon la revendication 1, dans lequel ladite distance de mouvement en avant de référence ($X_{REF}$) mémorisée dans lesdits moyens de mémorisation (M1) est une distance de mouvement tout droit en avant.

3. Système d'assistance au mouvement pour se garer selon la revendication 1 ou 2, comprenant des moyens de détection de vitesse de véhicule (S) pour détecter une vitesse de véhicule (V), et des moyens de détection d'accélération (M2) pour détecter une accélération ($\alpha$) du véhicule sur la base de la vitesse de véhicule (V) détectée par lesdits moyens de détection de vitesse de véhicule (S), et dans lequel
   dans une plage de vitesses de véhicule inférieure à une vitesse de véhicule de limite inférieure ($V_{MIN}$) pouvant être détectée par les moyens de détection de vitesse de véhicule (S), lesdits moyens de détection de distance de mouvement en avant (M3) estiment la distance (X) de mouvement en avant du véhicule sur la base de la vitesse de véhicule (V) détectée par lesdits moyens de détection de vitesse de véhicule (S) et de l'accélération ($\alpha$) détectée par lesdits moyens de détection d'accélération (M2) dans une autre plage de vitesses de véhicule.

4. Système d'assistance au mouvement pour se garer selon l'une quelconque des revendications 1 à 3, dans lequel lesdits moyens de détermination de minutage d'enseignement (M4) modifient le minutage d'enseignement sur la base de la vitesse de véhicule (V), détectée par lesdits moyens de détection de vitesse de véhicule (S).

5. Système d'assistance au mouvement pour se garer selon la revendication 4, dans lequel le minutage d'enseignement est hâté davantage lorsque la vitesse de véhicule (V) est plus élevée.

6. Système d'assistance au mouvement pour se garer selon l'une quelconque des revendications 1 à 5, dans lequel lesdits moyens de détermination de minutage d'enseignement (M4) modifient le minutage d'enseignement conformément au rayon minimum ($R_{MIN}$) du mouvement de braquage du véhicule.

7. Système d'assistance au mouvement pour se garer selon la revendication 6, dans lequel le minutage d'enseignement est hâté davantage lorsque le rayon minimum ($R_{MIN}$) du mouvement de braquage du véhicule est plus petit.

# FIG.1

# FIG.2

```
                          ┌─ S
         ┌─────────────────────┐
         │ VEHICLE SPEED       │
         │ DETECTING MEANS     │          ┌─ U
         └─────────────────────┘
    ┌────────────────────────────────────────────────────────┐
    │                                             M2           │
    │            ┌──────────────────┐   M1                     │
    │            │ ACCELERATION     │   ┌──────────────────┐   │
    │            │ DETECTING MEANS  │   │ MEMORY MEANS     │   │
    │            └──────────────────┘   └──────────────────┘   │
    │                              M3                          │
    │  ┌──────────────────────────┐                           │
    │  │ FORWARD MOVEMENT          │                           │
    │  │ DISTANCE DETECTING MEANS  │                           │
    │  └──────────────────────────┘                           │
    │                                             M4           │
    │            ┌──────────────────────┐                      │
    │            │ TEACHING-TIMING      │                      │
    │            │ DETERMINING MEANS    │                      │
    │            └──────────────────────┘                      │
    └────────────────────────────────────────────────────────┘
                                                      ┌─ A
                   ┌──────────────────┐
                   │ TEACHING MEANS   │
                   └──────────────────┘
```

# FIG.3

VEHICLE SPEED

$V_0$ $V_1$ $V_2$ $V_3$ $V_4$ $V_n$

$\Delta t_0$ $\Delta t_1$ $\Delta t_2$ $\Delta t_3$ $\Delta t_4$ $\Delta t_n$

TIME

EP 1 055 585 B1

# FIG.4

VEHICLE SPEED

DETECTABLE
LOWER LIMIT
VALUE

$V_{MIN}$

(1)

(2)

$\underline{A_3}$

(3)

0

$A_1$

$A_2$

TIME

EP 1 055 585 B1

# FIG.5A

VEHICLE SPEED

$V_1$

INCLINATION $\alpha$

$V_0$

$V_{MIN}$

$A_1$

0

t

$\Delta t_0$

TIME

# FIG.5B

VEHICLE SPEED

INCLINATION $\alpha$

$V_3$

$V_2$

$V_{MIN}$

$A_2$

0

t

$\Delta t_2$

TIME

14

# FIG.6

TEACHING TIMING

X ←

OVERRUN AMOUNT

NECESSARY FORWARD
MOVEMENT DISTANCE $X_{REF}$

VEHICLE SPEED 1km/h

OVERRUN AMOUNT

NECESSARY FORWARD
MOVEMENT DISTANCE $X_{REF}$

VEHICLE SPEED 5km/h

$P_2$

$P_1$

EP 1 055 585 B1

# FIG.7

TEACHING TIMING

$X_2$

NECESSARY FORWARD
MOVEMENT DISTANCE $X_{REF}$

VEHICLE SPEED 1km/h

TEACHING TIMING

$X_1$

NECESSARY FORWARD
MOVEMENT DISTANCE $X_{REF}$

VEHICLE SPEED 5km/h

$P_2$

$P_1$

X

EP 1 055 585 B1

# FIG.8

REFERENCE FORWARD
MOVEMENT DISTANCE

$X_{REF}$
$X_2$
$X_1$

0  1km/h  5km/h  VEHICLE SPEED

EP 1 055 585 B1

# FIG.9

$G_L$

$G_R$

VEHICLE HAVING SMALL MINIMUM
RADIUS OF TURNING MOVEMENT (4.5 m)

VEHICLE HAVING LARGE MINIMUM
RADIUS OF TURNING MOVEMENT (5.5 m)

$\underline{G}$

EP 1 055 585 B1

# FIG.10

X₄  X₃

Gₗ  Gᵣ

VEHICLE HAVING LARGE MINIMUM
RADIUS OF TURNING MOVEMENT (5.5 m)

VEHICLE HAVING SMALL MINIMUM
RADIUS OF TURNING MOVEMENT (4.5 m)

G

EP 1 055 585 B1

# FIG.11